# FASCICULE DE BREVET EUROPEEN

(11) **EP 2 793 632 B1**
(45) Date de publication et mention de la délivrance du brevet: **24.07.2019**
(21) Numéro de dépôt: 12801596.3
(22) Date de dépôt: 14.12.2012
(51) Int. Cl.: A43B 13/02, A43B 13/04, C08K 3/36, C08K 5/548, C08L 9/00, C08L 21/00

(54) **SEMELLE DE CHAUSSURE COMPORTANT UNE COMPOSITION DE CAOUTCHOUC A BASE DE CAOUTCHOUC NITRILE-BUTADIENE, D'UNE HUILE ET D'UNE RESINE**
SCHUHSOHLE MIT EINER KAUTSCHUKZUSAMMENSETZUNG AUF BASIS VON NITRILBUTADIENKAUTSCHUK, EINEM ÖL UND EINEM HARZ
SHOE SOLE COMPRISING A RUBBER COMPOSITION BASED ON NITRILE-BUTADIENE RUBBER, AN OIL AND A RESIN

(30) Priorité: 23.12.2011 FR 1162355
(43) Date de publication de la demande: 29.10.2014
(73) Titulaire: Compagnie Générale des Etablissements Michelin, 63000 Clermont-Ferrand (FR)
(72) Inventeur: RAPO-BRUNET, Sofia, F-63040 Clermont-Ferrand Cedex 9 (FR)
(74) Mandataire: Sidhu, Alban
(86) Numéro de dépôt international: PCT/EP2012/075604
(87) Numéro de publication internationale: WO 2013/092429

(56) Documents cités:
- WO-A1-02/052971
- WO-A2-2005/060472
- US-A- 5 755 045
- US-A1- 2002 054 970

## Description

L'invention est relative aux semelles de chaussures ainsi qu'aux compositions de caoutchouc utilisables pour la fabrication de telles semelles. L'invention concerne les chaussures, notamment les chaussures de travail, de sécurité, ou les chaussures de sport, par exemple qui nécessitent de bonnes qualités d'adhérence sur des sols naturellement rendus glissants par des matières étrangères liquides ou solides, comme par exemple des revêtements très lisses, naturels ou synthétiques, tels que les sols synthétiques notamment en matériau Linoleum (marque déposée), les carrelages vernissés, la pierre polie, les surfaces métalliques, surtout lorsque ces surfaces sont humides ou mouillées par un liquide (eau, huile, graisse, sang, savon...), voire recouvertes de boue ou de glace.

Une semelle de chaussure doit obéir de manière connue à un grand nombre d'exigences techniques, souvent antinomiques, parmi lesquelles l'adhérence sur divers qualités de sols, la résistance à l'usure, la résistance à l'entaille, et la faible absorption des hydrocarbures synthétiques et naturels.

Ces compromis de propriétés peuvent être obtenus, notamment grâce à l'emploi de nouvelles compositions à base de caoutchoucs nitrile. Les caoutchoucs nitrile présentent la faculté de faiblement absorber les hydrocarbures. Outre leur excellente tenue aux produits pétroliers, ils possèdent, un appréciable comportement aux solvants aliphatiques ainsi qu'aux huiles et graisses animales ou végétales.

Un exemple d'une telle semelle est décrit dans US 2002/0054970 A1.

Toutefois, ils sont particulièrement rigides. Pour diminuer leur rigidité, il est possible de réduire le taux de charge ou d'augmenter le taux de plastifiant.

Toutefois, conformément à leur faible pouvoir d'absorption des huiles, le taux de plastifiant qui peut être introduit est limité.

Poursuivant leurs recherches, les Demanderesses ont découvert une composition de caoutchouc comprenant un caoutchouc nitrile-butadiénique associé à une combinaison de plastifiants spécifiques, utilisée comme semelle de chaussure, qui permet de pallier l'inconvénient précité et ainsi de garantir une bonne adhérence sur divers sols, tout en conservant une bonne résistance à l'usure.

Ainsi, un premier objet de l'invention concerne une semelle de chaussure selon la revendication indépendante 1. Les modes de réalisation préférés de l'invention sont spécifiés dans les revendications dépendantes.

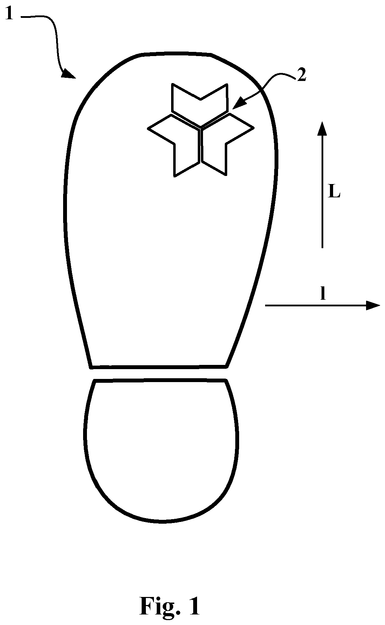

L'invention ainsi que ses avantages seront aisément compris à la lumière de la description et des exemples de réalisation qui suivent, ainsi que les figures 1 à 3 relatives à ces exemples qui schématisent, en vue de dessus à 3 un exemple de semelle de chaussure conforme à l'invention.

### I - MESURES ET TESTS UTILISES

Les compositions de caoutchouc utilisées dans les semelles de chaussures selon l'invention ainsi que les semelles elles-mêmes, sont caractérisées après cuisson, comme indiqué ci-après.

### I.1 - Essais de traction

La préparation des éprouvettes, ainsi que le mode opératoire utilisé pour la réalisation de la mesure est conforme à la norme ISO 37. Les éprouvettes haltères utilisées sont de type 2.

Ces essais permettent de déterminer les contraintes d'élasticité et les propriétés à la rupture. On mesure les allongements à la rupture (AR en %) et les contraintes à la rupture (CR en MPa). Toutes ces mesures de traction sont effectuées dans les conditions normales de température (23 ± 2°C) et d'hygrométrie (50 ± 5% d'humidité relative), selon la norme française ISO 37.

### I.2 - Dureté Shore A

La dureté Shore A des compositions après cuisson est appréciée conformément à la norme ISO 48.

### I.3- Test d'usure

Le test d'usure est réalisé selon la méthode SATRA TM 174 : 1994, du laboratoire Satra Technology Center. Il consiste à mesurer la perte en volume, exprimée en mm³, d'un échantillon de composition d'élastomère frotté sur une surface abrasive.

### I.4 - Mesure d'absorption d'hydrocarbure

La quantité d'hydrocarbure absorbée par un échantillon de composition de caoutchouc est mesurée selon la méthode SATRA TM 63 : 2009, du laboratoire Satra Technology Center. On mesure la quantité d'huile absorbée par des échantillons, après 24h d'immersion dans un solvant hydrocarboné, le 2, 2, 4 triméthylpentane, à 23°C.

### I.5 - Mesure du coefficient de frottement

Des tests de mesures de coefficient de frottement sont réalisés sur des semelles de chaussure, selon la méthode SATRA TM 144 : 2007, du laboratoire Satra Technology Center.

Pour des valeurs du coefficient de frottement comprises entre 0.3 et 1.25, le piéton peut se déplacer en toute sécurité. En dessous de 0.3, les risques de glissements du piéton sont trop élevés, au-dessus de 1.25, l'adhérence est trop importante et le piéton peut développer des problèmes articulaires.

### II - DESCRIPTION DETAILLEE DE L'INVENTION

Dans la présente demande, on entend de manière connue par :
- "élastomère (ou indistinctement caoutchouc) diénique", un élastomère issu au moins en partie (c'est-à-dire un homopolymère ou un copolymère) de monomère(s) diène(s) (i.e., porteur(s) de deux doubles liaisons carbone-carbone, conjuguées ou non) ;
- "pce" signifie parties en poids pour cent parties d'élastomère (du total des élastomères si plusieurs élastomères sont présents).

D'autre part, dans la présente description et sauf indication expresse différente, tous les pourcentages (%) indiqués sont des % en masse ; de même, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

La semelle de chaussure selon l'invention a donc pour caractéristique essentielle de comporter une composition de caoutchouc comprenant 60 à 100 pce d'un caoutchouc nitrile-butadiène, entre 10 et 50 pce d'une charge renforçante, un système plastifiant comprenant une résine hydrocarbonée présentant une Tg supérieure à 20 °C et un plastifiant liquide à 20°C dont la Tg est inférieure à -20°C, un système de réticulation

### II.1 - Caoutchouc nitrile-butadiène

La composition de caoutchouc de la semelle de chaussure selon l'invention comporte de 60 à 100 pce de caoutchouc nitrile-butadiène.

Le caoutchouc nitrile-butadiène est par définition un copolymère à base d'au moins un monomère butadiène et un monomère nitrile, c'est-à-dire un monomère porteur d'une fonction nitrile.

Les caoutchoucs nitrile-butadiène sont connus pour leurs propriétés de résistance aux hydrocarbures. Cette résistance augmente en fonction de l'augmentation du rapport de monomère nitrile sur ceux de butadiène. Préférentiellement, le caoutchouc nitrile comprend entre 25 et 45 % en poids de monomère nitrile.

Les monomères nitrile sont par exemple, l'acrylonitrile, le méthacrylonitrile, l'éthyl-acrylonitrile, le crotononitrile, le 2-pentenonitrile ou les mélanges de ces composés, parmi lesquels l'acrylonitrile est préféré.

Pour une teneur en butadiène comprise entre 55 et 75 % en poids, le caoutchouc nitrile-butadiène s'est révélé présenter une adhésion optimale avec les compositions de caoutchouc environnantes, dans le cas d'une semelle de chaussure comportant plusieurs couches d'élastomères; en dessous de 55% en poids, l'adhésion est considérée insuffisante.

Les monomères butadiène qui conviennent sont en particulier le butadiène 1,3, 2,3-diméthyl-1,3-butadiène, le 2-méthyl-1,3-butadiène, le 2-éthyl-1,3-butadiène, le 2-phényl-1,3-butadiène, ou les mélanges de ces diènes. Parmi ces diènes conjugués sont utilisés de préférence le butadiène 1,3 ou le 2-méthyl-1,3-butadiène, plus préférentiellement le butadiène 1,3.

Selon un autre mode de réalisation préférentiel, le caoutchouc nitrile-butadiène a une température de transition vitreuse (Tg, mesurée selon ASTM D3418) comprise dans le domaine de 0°C à -60 °C, plus préférentiellement dans le domaine de -5 °C à -50 °C. La Tg peut être notamment ajustée dans ces domaines de température grâce aux quantités de butadiène présentes dans le polymère.

Selon un mode préférentiel de réalisation de l'invention, le caoutchouc nitrile est un caoutchouc NBR. Le NBR possède donc une teneur en monomère nitrile comprise entre 10 et 60%, préférentiellement entre 20 et 50%, notamment entre 25 et 45% en poids. Les NBR sont disponibles commercialement, notamment vendus par la société Lanxess sous la dénomination « Perbunam 3445F », produit comportant environ 34 % en poids d'acrylonitrile.

Selon un autre mode particulier de réalisation, la composition de caoutchouc de la semelle de chaussure selon l'invention comporte en outre au moins un second élastomère diénique, autre que le caoutchouc nitrile-butadiène, cet élastomère optionnel étant présent selon un taux de 0 à 40 pce et de préférence à un taux entre 0 et 20 pce.

Le second élastomère diénique est choisi préférentiellement dans le groupe constitué par les polybutadiènes (BR), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR) et les mélanges de ces élastomères.

Plus préférentiellement, le second élastomère diénique est choisi dans le groupe constitué par le caoutchouc naturel, les polybutadiènes et les mélanges de ces élastomères.

Ces seconds élastomères diéniques peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

Conviennent notamment les polybutadiènes ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse, mesurée selon ASTM D3418) entre 0°C et -70°C et plus particulièrement entre -10°C et -60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C.

Selon un autre mode de réalisation particulier, le second élastomère diénique est un élastomère isoprénique. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

### II.2 - Charge renforçante

La semelle de chaussure comporte comme autre caractéristique essentielle entre 10 et 50 pce d'une charge renforçante (noir de carbone et/ou charge inorganique renforçante telle que silice), préférentiellement entre 10 et 40 pce. En dessous de 10 pce, la cohésion de la semelle de chaussure est jugée insuffisante, au-delà de 50 pce on s'expose à un risque de rigidification excessive de la semelle.

On peut utiliser tout type de charge renforçante connue pour ses capacités à renforcer une composition de caoutchouc utilisable pour la fabrication d'objets caoutchoucteux, notamment semelles ou pneumatiques, par exemple une charge organique tel que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs dits de grade pneumatique. Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu dans la présente demande, par définition, toute charge inorganique ou minérale (quelles que soient sa couleur et son origine naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication d'objets caoutchouteux, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices « Ultrasil 7000 » et « Ultrasil 7005 » de la société Degussa, les silices « Zeosil 1165MP », « 1135MP » et « 1115MP » de la société Rhodia, la silice « Hi-Sil EZ150G » de la société PPG, les silices « Zeopol 8715 », « 8745 » et « 8755 » de la Société Huber, les silices à haute surface spécifique telles que décrites dans la demande WO 03/16837.

La charge inorganique renforçante utilisée, en particulier s'il s'agit de silice, a de préférence une surface BET comprise entre 45 et 400 m²/g, plus préférentiellement comprise entre 60 et 300 m²/g.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (I) suivante:

(I) Z - A - Sₓ - A - Z ,

dans laquelle:
- x est un entier de 2 à 8 (de préférence de 2 à 5) ;
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
- Z répond à l'une des formules ci-après: 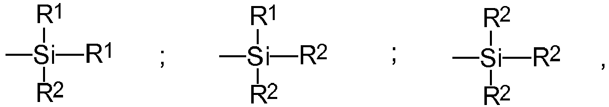 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R² = OH dans la formule VIII ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc conformes à l'invention, la teneur en agent de couplage est préférentiellement comprise entre 4 et 12 pce, plus préférentiellement entre 4 et 8 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

### II.3 - Plastifiants

La composition de la semelle de chaussure selon l'invention a pour autre caractéristique essentielle de comporter un système plastifiant comprenant :
- une résine hydrocarbonée présentant une Tg supérieure à 20°C ;
- un plastifiant liquide à 20°C dont la Tg est inférieure à -20°C.

Préférentiellement, le système plastifiant comprend un taux A compris entre 4 et 30 pce d'une résine hydrocarbonée présentant une Tg supérieure à 20°C.

Préférentiellement, le système plastifiant comprend aussi un taux B compris entre 4 et 30 pce d'un plastifiant liquide à 20°C dont la Tg est inférieure à 20°C.

Encore plus préférentiellement, la somme des taux A et B est comprise entre 8 et 40 pce.

Le plastifiant liquide est liquide à 20 °C, il est dit à « basse Tg », c'est-à-dire qu'il présente une Tg inférieure à -20 °C, de préférence inférieure à -40 °C.

Toute huile d'extension, tout plastifiant liquide connu pour ses propriétés plastifiantes vis-à-vis d'élastomères diéniques, est utilisable. A température ambiante (20°C), ces plastifiants ou ces huiles, plus ou moins visqueux, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Conviennent particulièrement les plastifiants liquides choisis dans le groupe constitué par les polymères diéniques liquides, les huiles polyoléfiniques, les huiles paraffiniques, les huiles DAE (*Distillate Aromatic Extracts*), les huiles MES (*Medium Extracted Solvates*), les huiles TDAE (*Treated Distillate Aromatic Extracts*), les huiles RAE (*Residual Aromatic Extracts*), les huiles TRAE (*Treated Residual Aromatic Extracts*), les huiles SRAE (*Safety Residual Aromatic Extracts*), les huiles minérales, les huiles végétales, les plastifiants éthers, les plastifiants esters, les plastifiants phosphates, les plastifiants sulfonates et les mélanges de ces composés. Selon un mode de réalisation plus préférentiel, le plastifiant liquide est choisi dans le groupe constitué par les huiles MES, les huiles TDAE, les huiles végétales et les mélanges de ces huiles. Encore plus préférentiellement le plastifiant liquide est une huile végétale.

Selon un mode de réalisation préférentiel de l'invention, le plastifiant liquide, notamment huile de pétrole, est du type non aromatique. Un plastifiant liquide est qualifié de non aromatique dès lors qu'il présente une teneur en composés aromatiques polycycliques, déterminé avec l'extrait dans du DMSO selon la méthode IP 346, de moins de 3 % en poids, par rapport au poids total du plastifiant. A ce titre peut être utilisé préférentiellement un agent plastifiant liquide choisi dans le groupe constitué par les huiles MES, les huiles TDAE, les huiles paraffiniques et les mélanges de ces huiles. Conviennent également comme huile de pétrole les huiles RAE, les huiles TRAE et les huiles SRAE ou les mélanges de ces huiles, qui contiennent de faibles teneurs en composés polycycliques.

Selon un autre mode de réalisation particulier, le plastifiant liquide est un dérivé terpénique ; à titre d'exemple peut être cité notamment le produit « Dimarone » de Yasuhara.

Conviennent également les polymères liquides issus de la polymérisation d'oléfines ou de diènes, comme par exemple ceux choisis dans le groupe constitué par les polybutènes, les polydiènes, en particulier les polybutadiènes, les polyisoprènes, les copolymères de butadiène et d'isoprène, les copolymères de butadiène ou d'isoprène et de styrène, et les mélanges de ces polymères liquides. La masse molaire moyenne en nombre de tels polymères liquides est préférentiellement comprise dans un domaine allant de 500 g/mol à 50 000 g/mol, plus préférentiellement de 1000 g/mol à 10 000 g/mol. A titre d'exemple peuvent être cités notamment les produits « Ricon » de la société Sartomer.

Selon un autre mode de réalisation préférentiel de l'invention, le plastifiant liquide est une huile végétale. A titre préférentiel est utilisée une huile choisie dans le groupe constituée par les huiles de lin, carthame, soja, maïs, coton, navette, ricin, abrasin, pin, tournesol, palme, olive, noix de coco, arachide, pépin de raisin, et les mélanges de ces huiles, en particulier une huile de tournesol. Cette huile végétale, particulièrement huile de tournesol, est plus préférentiellement une huile riche en acide oléique, c'est-à-dire que l'acide gras (ou l'ensemble des acides gras si plusieurs sont présents) dont elle dérive comporte de l'acide oléique selon une fraction massique au moins égale à 60%, plus préférentiellement au moins égale à 70%, en particulier égale ou supérieure à 80%.

Selon un autre mode de réalisation particulier de l'invention, le plastifiant liquide est un éther ; peuvent être cités par exemple les polyéthylène glycols ou les polypropylène glycols.

Conviennent également les plastifiants liquides choisis dans le groupe constitué par les plastifiants esters, les plastifiants phosphates, les plastifiants sulfonates et les mélanges de ces composés. Conviennent notamment les triesters choisis dans le groupe constitué par les triesters d'acide carboxylique, d'acide phosphorique, d'acide sulfonique et les mélanges de ces triesters. A titre d'exemples de plastifiants esters d'acide carboxylique, on peut citer notamment les composés choisis dans le groupe constitué par les trimellitates, les pyromellitates, les phtalates, les 1,2-cyclohexane dicarboxylates, les adipates, les azélates, les sébaçates, les triesters de glycérol et les mélanges de ces composés. Parmi les triesters, on peut citer en particulier les triesters de glycérol, de préférence constitués majoritairement (pour plus de 50 %, plus préférentiellement pour plus de 80 % en poids) d'un acide gras insaturé en C₁₈, c'est-à-dire choisi dans le groupe constitué par l'acide oléique, l'acide linoléique, l'acide linolénique et les mélanges de ces acides ; plus préférentiellement, qu'il soit d'origine synthétique ou naturelle, l'acide gras utilisé est constitué pour plus de 60%, plus préférentiellement encore pour plus de 70% en poids d'acide oléique ; de tels triesters (trioléates) à fort taux d'acide oléique, d'origine naturelle ou de synthèse, sont bien connus, ils ont été décrits par exemple dans la demande WO 02/088238, à titre d'agents plastifiants dans des bandes de roulement pour pneumatiques. A titre de plastifiants phosphates, on peut citer par exemple ceux qui contiennent entre 12 et 30 atomes de carbone, par exemple le trioctyle phosphate.

La résine plastifiante hydrocarbonée présente une Tg supérieure à 20°C.

La dénomination "résine" est réservée dans la présente demande, par définition, à un composé qui est solide à température ambiante (20°C), par opposition notamment à l'agent plastifiant liquide précédemment décrit.

Les résines hydrocarbonées sont des polymères bien connus de l'homme du métier, essentiellement à base de carbone et hydrogène mais pouvant comporter d'autres types d'atomes, utilisables en particulier comme agents plastifiants ou agents tackifiants dans des matrices polymériques. Elles sont par nature miscibles (i.e., compatibles) aux taux utilisés avec les compositions de polymères auxquelles elles sont destinées, de manière à agir comme de véritables agents diluants. Elles ont été décrites par exemple dans l'ouvrage intitulé *"*Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods"*)*.* Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Leur Tg est de préférence supérieure à 30°C, notamment comprise entre 30°C et 95°C.

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, "softening point"). La température de ramollissement d'une résine hydrocarbonée est généralement supérieure d'environ 50 à 60°C à sa valeur de Tg. Le point de ramollissement est mesuré selon la norme ISO 4625 (méthode « Ring and Ball »). La macrostructure (Mw, Mn et Ip) est déterminée par chromatographie d'exclusion stérique (SEC) comme indiqué ci-après.

Pour rappel, l'analyse SEC, par exemple, consiste à séparer les macromolécules en solution suivant leur taille à travers des colonnes remplies d'un gel poreux ; les molécules sont séparées selon leur volume hydrodynamique, les plus volumineuses étant éluées en premier. L'échantillon à analyser est simplement préalablement solubilisé dans un solvant approprié, le tétrahydrofurane à une concentration de 1 g/litre. Puis la solution est filtrée sur un filtre de porosité 0,45 µm, avant injection dans l'appareillage. L'appareillage utilisé est par exemple une chaîne chromatographique "Waters alliance" selon les conditions suivantes : solvant d'élution : le tétrahydrofurane; température 35°C ; concentration 1 g/litre ; débit :1 ml/min ; volume injecté : 100 µl ; étalonnage de Moore avec des étalons de polystyrène ; jeu de 3 colonnes "Waters" en série ("Styragel HR4E", "Styragel HR1" et "Styragel HR 0.5") ; détection par réfractomètre différentiel (par exemple "WATERS 2410") pouvant être équipé d'un logiciel d'exploitation (par exemple "Waters Millenium").

Un étalonnage de Moore est conduit avec une série d'étalons commerciaux de polystyrène à faible Ip (inférieur à 1,2), de masses molaires connues, couvrant le domaine de masses à analyser. On déduit des données enregistrées (courbe de distribution massique des masses molaires) la masse molaire moyenne en masse (Mw), la masse molaire moyenne en nombre (Mn), ainsi que l'indice de polymolécularité (Ip = Mw/Mn). Toutes les valeurs de masses molaires indiquées dans la présente demande sont donc relatives à des courbes d'étalonnages réalisées avec des étalons de polystyrène.

Selon un mode de réalisation préférentiel de l'invention, la résine hydrocarbonée présente au moins une quelconque, plus préférentiellement l'ensemble des caractéristiques suivantes :
- une Tg supérieure à 20°C (en particulier compris entre 30°C et 100°C), plus préférentiellement supérieure à 30°C (en particulier entre 30°C et 95°C);
- un point de ramollissement supérieur à 50°C (en particulier compris entre 50°C et 150°C) ;
- une masse molaire moyenne en nombre (Mn) comprise entre 400 et 2000 g/mol, préférentiellement entre 500 et 1500 g/mol ;
- un indice de polymolécularité (Ip) inférieur à 3, préférentiellement à 2 (rappel : Ip = Mw/Mn avec Mw masse molaire moyenne en poids).

A titres d'exemples de telles résines hydrocarbonées, on peut citer celles choisies dans le groupe constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Parmi les résines de copolymères ci-dessus, on peut citer plus particulièrement celles choisies dans le groupe constitué par les résines de copolymère (D)CPD/ vinylaromatique, les résines de copolymère (D)CPD/ terpène, les résines de copolymère terpène phénol, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C9 (ou plus généralement d'une coupe C8 à C10).

Plus particulièrement, on peut citer les résines choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac", par Kolon sous dénomination "Hikorez" ou par la société Exxon Mobil sous dénomination "Escorez" pour ce qui concerne les résines coupe C5/ styrène ou résines coupe C5/ coupe C9, ou encore par la société Struktol sous dénomination "40 MS" ou "40 NS" (mélanges de résines aromatiques et/ou aliphatiques), ou encore par la société Slantsy Russie, revendue par la société Spa Comaredo sous la dénomination « Resin ROM 10R ».

### II.4 - Additifs divers

La composition élastomère de la semelle de chaussure peut comporter également tout ou partie des additifs usuels habituellement utilisés dans les compositions de caoutchouc pour pneumatiques, comme par exemple des agents de protection tels que anti-ozonants chimiques, anti-oxydants, des résines tackifiantes, des résines renforçantes, des accepteurs ou des donneurs de méthylène, un système de réticulation à base soit de soufre, soit de donneurs de soufre et/ou de peroxyde et/ou de bismaléimides, des accélérateurs de vulcanisation, des activateurs de vulcanisation.

Les compositions de la semelle de chaussure peuvent également contenir des activateurs de couplage lorsque qu'un agent de couplage est utilisé, des agents de recouvrement de la charge inorganique lorsqu'une charge inorganique est utilisée, ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de processabilité à l'état cru ; ces agents sont par exemple des hydroxysilanes ou des silanes hydrolysables tels que des alkyl-alkoxysilanes, des polyols, des polyéthers, des amines, des polyorganosiloxanes hydroxylés ou hydrolysables.

### 11.5 - Préparation des compositions

Les compositions utilisées dans les semelles de chaussure selon l'invention, peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :
- incorporer dans un mélangeur, à au moins 80 à 100 pce du caoutchouc nitrile-butadiène, au cours d'une première étape (dite "non-productive"), entre 10 et 50 pce de la charge renforçante, une résine plastifiante, et un plastifiant liquide, en malaxant thermomécaniquement le tout (par exemple en une ou plusieurs fois), jusqu'à atteindre une température maximale comprise entre 110°C et 190°C ;
- refroidir l'ensemble à une température inférieure à 100°C ;
- incorporer ensuite, au cours d'une seconde étape (dite "productive"), un système de réticulation ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires (caoutchouc nitrile-butadiène, charge renforçante), puis dans un deuxième temps, par exemple après une à deux minutes de malaxage, les autres additifs dont les plastifiants, éventuels agents de recouvrement de la charge ou de mise en oeuvre complémentaires, à l'exception du système de réticulation. La durée totale du malaxage, dans cette phase non-productive, est de préférence comprise entre 1 et 15 min.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productrice et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

La composition finale ainsi obtenue peut ensuite être calandrée, par exemple sous la forme d'une feuille, dans laquelle seront découpées les formes de la semelle, ou d'une plaque notamment pour une caractérisation au laboratoire.

L'invention concerne les semelles de chaussures précédemment décrites tant à l'état cru (c'est à dire, avant cuisson) qu'à l'état cuit (c'est à dire, après réticulation ou vulcanisation).

### II.6 - Semelle de chaussure selon l'invention

La composition de caoutchouc précédemment décrite est donc utilisée, dans tout type de semelle de chaussure, notamment dans une semelle de chaussure de travail présentant une sculpture de type « Star Tread », qui est décrite dans la demande WO 2010/040755. Cette semelle de chaussure peut en particulier être utilisée comme chaussure de sécurité ou de sport.

La figure 1 illustre un exemple préférentiel de réalisation d'une semelle de chaussure 1 de type « Star Tread » en vue de dessus, ainsi qu'un positionnement possible d'un pain 2 dans cette semelle de chaussure, de manière très schématique (notamment sans respect d'une échelle spécifique).

Sur les figures 2 et 3, la semelle de chaussure schématisée comporte une base en matériau élastomère dont une zone au moins est garnie de pains de contact 2 qui émergent de sa face inférieure de manière à venir en contact avec le sol,

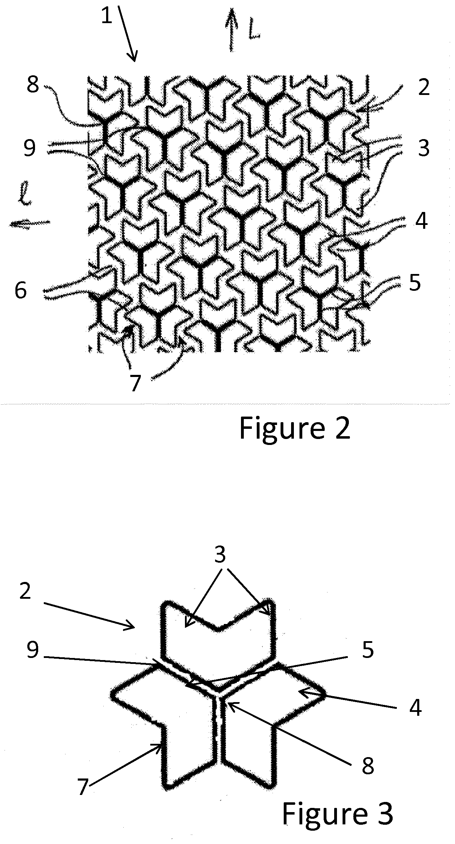

Sur la figure 2, si l'on conserve les mêmes conventions d'orientation du motif par rapport aux directions longitudinales L et transversale 1 de la semelle, on constate que tous les pains 2 en forme d'étoile à six branches possèdent chacun deux étraves 3 orientées principalement vers la direction longitudinale, dans chaque sens, et une étrave 4 qui est orientée dans la direction transversale dans chaque sens également.

En se référant à la figure 3, on voit qu'un pain 2 de la sculpture de la figure 2, comportant six étraves telles que 3 et 4, est divisé en trois pavés élémentaires 7 par trois fentes 5 procédant radialement vers l'extérieur à partir du centre 8 du pain 2. Chacune de ces fentes 5 débouche dans une rainure 6 séparant le pain 2 de ses voisins en un point en retrait 9 situé à la jonction de deux étraves adjacentes 3 et 4 sur le contour du pain 2. Chaque pavé élémentaire 7 comporte lui-même deux étraves adjacentes 3 ou 4 disposées en chevron.

### III - EXEMPLES DE REALISATION DE L'INVENTION

### III.1 - Préparation des compositions

On procède pour les essais qui suivent de la manière suivante : on introduit dans un mélangeur interne (taux de remplissage final : environ 80 à 95% en volume), dont la température initiale de cuve est d'environ 80 °C, successivement le caoutchouc nitrile-butadiène, la charge renforçante, les plastifiants, ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 155°C. On récupère le mélange ainsi obtenu, on le refroidit puis on incorpore du soufre et un accélérateur type sulfénamide sur un mélangeur (homo-finisseur) à 30 °C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'une semelle de chaussure.

### III.2 - Tests de caoutchouterie

Les essais qui suivent démontrent les excellentes propriétés mécaniques, d'adhérence, de résistance à l'absorption d'hydrocarbures, et de résistance à l'usure, d'une semelle de chaussure selon l'invention, en contact sur diverses surfaces.

Pour les besoins de ces essais, cinq compositions de caoutchouc pour semelles de chaussures ont été préparées comme indiqué précédemment, trois conformément à l'invention (notée ci-après C.3 à C.5) et deux non conformément à l'invention (compositions témoins notée ci-après C.1 et C.2). Leurs formulations (exprimées en pce) sont présentées dans le tableau 1 annexé.

Toutes les compositions de caoutchouc sont à base de 100 pce de NBR et 20 pce de silice.

La composition C.1 est une composition témoin, conventionnelle qui comporte comme plastifiant 10 pce d'huile de paraffine. 10 pce est la quantité maximale d'huile de paraffine qui peut être incorporée dans un élastomère de NBR, sans qu'on puisse observer un phénomène d'exsudation. La composition C.2 est une autre composition témoin, qui comporte 10 pce d'un agent plastifiant différent qui est une huile végétale de tournesol oléique.

Les compositions C.3 à C.5 sont des compositions d'élastomère selon l'invention qui comportent un mélange de deux plastifiants : un plastifiant liquide (10 pce d'une huile de tournesol à 85% en poids d'acide oléique) et une résine plastifiante hydrocarbonée (résine C5/C9), respectivement à 5, 15 et 30 pce. Dans ces compositions, la quantité totale de plastifiant est supérieure à 10 pce, toutefois aucun phénomène d'exsudation n'est observé.

Leurs propriétés après cuisson (vulcanisation) ont été résumées dans le tableau 2 annexé.

On note tout d'abord que les compositions C.3 à C.5 présentent après cuisson des propriétés de rupture (allongement rupture AR et contrainte rupture CR) supérieures à celles des compositions témoins C.1 et C.2, ce qui est un indicateur reconnu par l'homme du métier d'une amélioration de leurs propriétés mécaniques.

Les mesures de dureté shore A des compositions C.3 à C.5 selon l'invention présentent des valeurs inférieures à celle des compositions témoins C.1 et C.2, grâce à l'utilisation d'une combinaison de deux types de plastifiants, un plastifiant liquide et une résine hydrocarbonée. De telles valeurs témoignent de ce que ladite combinaison de plastifiants a bien été incorporée dans les mélanges, tout en ne produisant aucun phénomène d'exsudation des plastifiants de la semelle de chaussure vers l'extérieur.

Par ailleurs, les résultats des mesures de perte en volume montrent que les compositions C.3 et C.4 présentent une valeur inférieure à 150, qui est représentative de la valeur limite acceptable pour l'usure de semelle de chaussure, défini par le laboratoire Satra Technology Center. Ces compositions présentant des mesures de perte en volume inférieures à 150, ont toutes une dureté shore A supérieure à 50.

La composition C.5 présente une valeur de perte en volume nettement supérieure à 150 mm³, témoin d'une usure excessive. Cette composition ne répond pas aux critères exigibles pour la confection de semelles de chaussures.

Des mesures d'absorption d'hydrocarbures ont été réalisées sur les compositions C.1 à C.5. Ces compositions présentent un coefficient d'absorption de 2, ce qui est représentatif d'une faible absorption d'hydrocarbure car cette valeur est très inférieure à la valeur 12 préconisée par le laboratoire Satran Technology Center comme étant la limite acceptable.

### III.3 - Tests sur des semelles de chaussures

Ce test permet de mesurer le coefficient de frottement entre des semelles de chaussure selon l'invention comportant une sculpture de type « Star Tread » et confectionnées avec des compositions d'élastomère C.1 à C.5, en contact avec diverses surfaces. Les tests ont été réalisés sur des semelles de chaussure présentant des pains de sculpture d'une hauteur de 3 mm et comportant des entailles de 2,1 mm de profondeur.

On constate que quel que soit le type de surface, les coefficients de frottement sont tous au moins égaux à 0.3 (voir tableau 3), voire supérieure, ce qui est significatif d'une bonne adhérence des semelles de chaussures sur ces diverses surfaces.

En résumé, les résultats de ces essais démontrent que l'emploi d'une composition d'élastomère à base d'un caoutchouc nitrile-butadiène et d'un mélange de deux plastifiants, un plastifiants liquide et une résine, à des taux spécifiques, dans une semelle de chaussure selon l'invention, permet d'obtenir des semelles de chaussures présentant une bonne adhérence sur diverses sols, tout en conservant une bonne résistance à l'usure et une faible absorption des hydrocarbures.

**Tableau 1**

| Composition n° | C.1 | C.2 | C.3 | C.4 | C.5 |
|---|---|---|---|---|---|
| NBR (1) | 100 | 100 | 100 | 100 | 100 |
| Charge (2) | 20 | 20 | 20 | 20 | 20 |
| Agent de couplage (3) | 1.5 | 1.5 | 1.5 | 1.5 | 1.5 |
| Huile de paraffine | 10 | - | - | - | - |
| Huile de tournesol (4) | - | 10 | 10 | 10 | 10 |
| Résine (5) | - | - | 5 | 15 | 30 |
| DPG (6) | 1 | 1 | 1 | 1 | 1 |
| Agent anti-oxydant (7) | 2 | 2 | 2 | 2 | 2 |
| Cire anti-ozone | 1 | 1 | 1 | 1 | 1 |
| Acide stéarique (8) | 1.5 | 1.5 | 1.5 | 1.5 | 1.5 |
| ZnO (9) | 1.5 | 1.5 | 1.5 | 1.5 | 1.5 |
| CBS (10) | 2.5 | 2.5 | 2.5 | 2.5 | 2.5 |
| Soufre | 2.5 | 2.5 | 2.5 | 2.5 | 2.5 |
| ZBEC (11) | 0.5 | 0.5 | 0.5 | 0.5 | 0.5 |

| | | | | | |
|---|---|---|---|---|---|
| (1) NBR (« Perbunan 3445F » de la société Lanxess) ; (2) Silice (« Ultrasil VN3 GR » de la société Evonik) ; (3) Agent de couplage TESTP (« Si69 » de la société Degussa) ; (4) Huile de tournesol oléique («Lubrirob Tod 1880» de la société Novance) ; (5) Résine haute Tg C5/C9 (« ROM 10R » de la société Spa Comaredo) ; (6) DPG = diphénylguanidine (« Perkacit DPG » de la société Flexsys) ; (7) Isobutyl méthylstyrène phénol (Wingtay S de la société Eliokem) ; (8) Stéarine (« Pristerene » de la société Uniquema) ; (9) Oxyde de zinc (grade industriel - société Umicore) ; (10) N-dicyclohexyl-2-benzothiazol-sulfénamide ("Santocure CBS" de la société Flexsys) ; (11) Dibenzyl di thiocarbamate de zinc (« Perkacit ZBEC » de la sté Performance Additives). | | | | | |

**Tableau 2**

| Composition n° | C.1 | C.2 | C.3 | C.4 | C.5 |
|---|---|---|---|---|---|
| Shore A | 60 | 58 | 56 | 50 | 45 |
| AR (%) | 420 | 460 | 500 | 670 | 770 |
| CR (MPa) | 8 | 8 | 8 | 13 | 10 |
| Perte en volume (mm³) | 85 | 83 | 93 | 149 | 400 |
| Absorption d'hydrocarbure(%) | 1.3 | 1.3 | 1.7 | 2 | 2.5 |

**Tableau 3**

| Composition n° | C.2 | C.3 | C.4 | C.5 |
|---|---|---|---|---|
| Carrelage sec | 0.78 | 0.83 | 0.74 | 0.67 |
| Carrelage mouillé | 0.69 | 0.71 | 0.71 | 0.64 |
| Carrelage avec glycérine | 0.58 | 0.59 | 0.53 | 0.48 |
| Carrelage avec huile végétale | 0.45 | 0.53 | 0.5 | 0.44 |
| Acier avec glycérine | 0.30 | 0.33 | 0.3 | 0.3 |
| Céramique avec savon | 0.37 | 0.37 | 0.5 | 0.37 |
| Céramique avec huile végétale | 0.32 | 0.37 | 0.34 | 0.31 |
| Sol synthétique avec savon | 0.53 | 0.51 | 0.6 | 0.42 |

## Revendications

1. Semelle de chaussure (1) comprenant une composition de caoutchouc comportant au moins :
- 60 à 100 pce d'un caoutchouc nitrile-butadiène ;
- entre 10 et 50 pce d'une charge renforçante ;
- un système plastifiant comprenant :
- une résine hydrocarbonée présentant une Tg supérieure à 20 °C ;
- un plastifiant liquide à 20°C dont la Tg est inférieure à -20°C ;
- un système de réticulation,
dans laquelle le plastifiant liquide est choisi dans le groupe constitué par les polymères diéniques liquides, les huiles polyoléfines, les huiles paraffiniques, les huiles DAE, les huiles MES, les huiles TDAE, les huiles RAE, les huiles TRAE, les huiles SRAE, les huiles minérales, les huiles végétales, les plastifiants éthers, les plastifiants esters, les plastifiants phosphates, les plastifiants sulfonates et les mélanges de ces composés.

2. Semelle de chaussure selon la revendication 1, dans laquelle le caoutchouc nitrile-butadiène est un copolymère butadiène-acrylonitrile (NBR).

3. Semelle de chaussure selon l'une quelconque des revendications 1 et 2, dans laquelle le système plastifiant comprend un taux A compris entre 4 et 30 pce de la résine hydrocarbonée présentant une Tg supérieure à 20 °C.

4. Semelle de chaussure selon l'une quelconque des revendications 1 à 3, dans laquelle le système plastifiant comprend un taux B compris entre 4 et 30 pce du plastifiant liquide à 20°C dont la Tg est inférieure à -20°C.

5. Semelle de chaussure selon l'une quelconque des revendications 3 et 4, dans laquelle le taux A + B est compris entre 8 et 40 pce.

6. Semelle de chaussure selon l'une quelconque des revendications 1 à 5, dans laquelle la résine hydrocarbonée est choisie dans le groupe constitué par les résines d'homopolymères ou copolymères de cyclopentadiène ou dicyclopentadiène, les résines d'homopolymères ou copolymères terpène, les résines d'homopolymères ou copolymères de coupe C5, les résines d'homopolymères ou copolymères de coupe C9, les résines d'homopolymères ou copolymères d'alpha-méthyl-styrène et les mélanges de ces résines.

7. Semelle de chaussure selon la revendication 1, dans laquelle le plastifiant liquide est choisi dans le groupe constitué par les huiles MES, les huiles TDAE, les huiles végétales et les mélanges de ces huiles.

8. Semelle de chaussure selon la revendication 7, dans laquelle le plastifiant liquide est une huile végétale.

9. Semelle de chaussure selon la revendication 8, dans laquelle le plastifiant liquide est une huile de tournesol.

10. Semelle de chaussure selon l'une quelconque des revendications 1 à 9, dans laquelle la composition de caoutchouc comporte en outre un second élastomère diénique autre que le caoutchouc nitrile-butadiène.

11. Semelle de chaussure selon la revendication 10, dans laquelle la composition de caoutchouc comporte au plus 20 pce du second élastomère diénique.

12. Semelle de chaussure selon l'une quelconque des revendications 10 et 11, dans laquelle le second élastomère diénique est choisi dans le groupe constitué par les polybutadiènes (BR), les polyisoprènes de synthèse (IR), le caoutchouc naturel (NR), les copolymères de butadiène, les copolymères d'isoprène et les mélanges de ces élastomères.

13. Semelle de chaussure selon la revendication 12, dans laquelle le second élastomère diénique est choisi dans le groupe constitué par le caoutchouc naturel (NR), les polybutadiènes, et les mélanges de ces élastomères.

14. Semelle de chaussure selon l'une quelconque des revendications de 1 à 13, dans laquelle la charge renforçante comporte du noir de carbone, de la silice, ou un mélange de noir de carbone et de silice.

15. Semelle de chaussure selon la revendication 14, dans laquelle le taux de charge renforçante est compris entre 10 et 40 pce.

## Patentansprüche

1. Schuhsohle (1), umfassend eine Kautschukzusammensetzung, die mindestens Folgendes umfasst:
- 60 bis 100 phe eines Nitril-Butadien-Kautschuks;
- zwischen 10 und 50 phe eines verstärkenden Füllstoffs;
- ein Weichmachersystem, umfassend:
- ein Kohlenwasserstoffharz mit einer Tg von mehr als 20 °C;
- einen bei 20 °C flüssigen Weichmacher mit einer Tg von weniger als -20 °C;
- ein Vernetzungssystem,
wobei der flüssige Weichmacher aus der Gruppe bestehend aus flüssigen Dienpolymeren, Polyolefin-ölen, Paraffinölen, DAE-Ölen, MES-Ölen, TDAE-Ölen, RAE-Ölen, TRAE-Ölen, SRAE-Ölen, Mineralölen, Pflanzenölen, Ether-Weichmachern, Ester-Weichmachern, Phosphat-Weichmachern, Sulfonat-Weichmachern und Mischungen dieser Verbindungen ausgewählt ist.

2. Schuhsohle nach Anspruch 1, wobei es sich bei dem Nitril-Butadien-Kautschuk um ein Butadien-Acrylnitril-Copolymer (NBR) handelt.

3. Schuhsohle nach einem der Ansprüche 1 und 2, wobei das Weichmachersystem einen Gehalt A des Kohlen-wasserstoffharzes mit einer Tg von mehr als 20 °C zwischen 4 und 30 phe aufweist.

4. Schuhsohle nach einem der Ansprüche 1 bis 3, wobei das Weichmachersystem einen Gehalt B des bei 20 °C flüssigen Weichmachers mit einer Tg von weniger als -20 °C zwischen 4 und 30 phe aufweist.

5. Schuhsohle nach einem der Ansprüche 3 und 4, wobei der Gehalt A + B zwischen 8 und 40 phe liegt.

6. Schuhsohle nach einem der Ansprüche 1 bis 5, wobei das Kohlenwasserstoffharz aus der Gruppe bestehend aus Homopolymer- oder Copolymerharzen von Cyclopentadien oder Dicyclopentadien, Terpen-Homopolymer- oder -Copolymerharzen, C₅-Schnitt-Homopolymer- oder - Copolymerharzen, C₉-Schnitt-Homopolymer- oder -Copolymerharzen, Homopolymer- oder Copolymerharzen von alpha-Methylstyrol und Mischungen dieser Harze ausgewählt ist.

7. Schuhsohle nach Anspruch 1, wobei der flüssige Weichmacher aus der Gruppe bestehend aus MES-Ölen, TDAE-Ölen, Pflanzenölen und Mischungen dieser Öle ausgewählt ist.

8. Schuhsohle nach Anspruch 7, wobei es sich bei dem flüssigen Weichmacher um ein Pflanzenöl handelt.

9. Schuhsohle nach Anspruch 8, wobei es sich bei dem flüssigen Weichmacher um ein Sonnenblumenöl handelt.

10. Schuhsohle nach einem der Ansprüche 1 bis 9, wobei die Kautschukzusammensetzung außerdem ein zweites Dienelastomer, das von dem Nitril-Butadien-Kautschuk verschieden ist, umfasst.

11. Schuhsohle nach Anspruch 10, wobei die Kautschukzusammensetzung höchstens 20 phe des zweiten Dienelastomers umfasst.

12. Schuhsohle nach einem der Ansprüche 10 und 11, wobei das zweite Dienelastomer aus der Gruppe bestehend aus Polybutadienen (BR), synthetischen Polyisoprenen (IR), Naturkautschuk (NR), Butadien-Copolymeren, Isopren-Copolymeren und Mischungen dieser Elastomere ausgewählt ist.

13. Schuhsohle nach Anspruch 12, wobei das zweite Dienelastomer aus der Gruppe bestehend aus Naturkautschuk (NR), Polybutadienen und Mischungen dieser Elastomere ausgewählt ist.

14. Schuhsohle nach einem der Ansprüche 1 bis 13, wobei der verstärkende Füllstoff Ruß, Kieselsäure oder eine Mischung von Ruß und Kieselsäure umfasst.

15. Schuhsohle Anspruch 14, wobei der Gehalt an anorganischem Füllstoff zwischen 10 und 40 phe liegt.

## Claims

1. Shoe sole (1) comprising a rubber composition comprising at least:
- 60 to 100 phr of a nitrile-butadiene rubber;
- between 10 and 50 phr of a reinforcing filler;
- a plasticizing system comprising:
- a hydrocarbon-based resin having a Tg of greater than 20°C;
- a plasticizer that is liquid at 20°C, the Tg of which is less than -20°C;
- a crosslinking system,
wherein the liquid plasticizer is selected from the group consisting of liquid diene polymers, polyolefin oils, paraffinic oils, DAE oils, MES oils, TDAE oils, RAE oils, TRAE oils, SRAE oils, mineral oils, vegetable oils, ether plasticizers, ester plasticizers, phosphate plasticizers, sulphonate plasticizers and mixtures of these compounds.

2. Shoe sole according to Claim 1, wherein the nitrile-butadiene rubber is a butadiene/acrylonitrile copolymer (NBR).

3. Shoe sole according to either one of Claims 1 and 2, wherein the plasticizing system comprises a content A of between 4 and 30 phr of the hydrocarbon-based resin having a Tg of greater than 20°C.

4. Shoe sole according to any one of Claims 1 to 3, wherein the plasticizing system comprises a content B of between 4 and 30 phr of the plasticizer that is liquid at 20°C, the Tg of which is less than -20°C.

5. Shoe sole according to either one of Claims 3 and 4, wherein the content A + B is between 8 and 40 phr.

6. Shoe sole according to any one of Claims 1 to 5, wherein the hydrocarbon-based resin is selected from the group consisting of cyclopentadiene homopolymer or copolymer resins, dicyclopentadiene homopolymer or copolymer resins, terpene homopolymer or copolymer resins, C₅ fraction homopolymer or copolymer resins, C₉ fraction homopolymer or copolymer resins, α-methylstyrene homopolymer or copolymer resins and mixtures of these resins.

7. Shoe sole according to Claim 1, wherein the liquid plasticizer is selected from the group consisting of MES oils, TDAE oils, vegetable oils and mixtures of these oils.

8. Shoe sole according to Claim 7, wherein the liquid plasticizer is a vegetable oil.

9. Shoe sole according to Claim 8, wherein the liquid plasticizer is a sunflower oil.

10. Shoe sole according to any one of Claims 1 to 9, wherein the rubber composition also comprises a second diene elastomer other than the nitrile-butadiene rubber.

11. Shoe sole according to Claim 10, wherein the rubber composition comprises at most 20 phr of the second diene elastomer.

12. Shoe sole according to either one of Claims 10 and 11, wherein the second diene elastomer is selected from the group consisting of polybutadienes (BRs), synthetic polyisoprenes (IRs), natural rubber (NR), butadiene copolymers, isoprene copolymers and blends of these elastomers.

13. Shoe sole according to Claim 12, wherein the second diene elastomer is selected from the group consisting of natural rubber (NR), polybutadienes, and blends of these elastomers.

14. Shoe sole according to any one of Claims 1 to 13, wherein the reinforcing filler comprises carbon black, silica, or a mixture of carbon black and silica.

15. Shoe sole according to Claim 14, wherein the content of reinforcing filler is between 10 and 40 phr.
